# EUROPEAN PATENT SPECIFICATION

(11) **EP 2 921 848 B1**
(45) Date of publication and mention of the grant of the patent: **30.05.2018**
(21) Application number: 13854958.9
(22) Date of filing: 11.11.2013
(51) Int. Cl.: G01N 22/04

(54) **MOISTURE METER FOR BULK SOLIDS**
FEUCHTIGKEITSMESSVORRICHTUNG FÜR SCHÜTTGÜTER
HYDROMÈTRE POUR MATÉRIAUX EN VRAC

(30) Priority: 14.11.2012 RU 2012148490
(43) Date of publication of application: 23.09.2015
(73) Proprietor: PCE Deutschland GmbH, 59872 Meschede (DE); The Design Bureau "Fizelektronpribor" Ltd, Samara 443010 (RU)
(72) Inventor: SIZIKOV, Oleg Kreonidovich, Samara 443096 (RU); KONNOV, Vladimir Valerievich, Samara 443056 (RU); SILAEV, Konstantin Vladimirovich, Samara 443114 (RU); SEMENOV, Andrey Sergeevich, Samarskaya obl. 446570 (RU); RAGAZIN, Denis Nicolaevich, s. Krasnoselskoye, 446561 (RU)
(74) Representative: Feder Walter Ebert
(86) International application number: PCT/RU2013/001001
(87) International publication number: WO 2014/077736

(56) References cited:
- CN-A- 1 185 834
- RU-C1- 2 096 768
- RU-C1- 2 277 212
- RU-C2- 2 269 766
- US-A- 5 212 453
- US-A1- 2003 080 753
- WOJCIECH SKIERUCHA ET AL: "A TDR-Based Soil Moisture Monitoring System with Simultaneous Measurement of Soil Temperature and Electrical Conductivity", SENSORS, vol. 12, no. 12, 9 October 2012 (2012-10-09), pages 13545-13566, XP055274178, DOI: 10.3390/s121013545

## Description

### PERTINENT ART

This engineering solution relates to instrumentation and can be used in an industrial environment for the purposes of measurements of moisture content in crushed stone, sand, concrete mixture, crop grains, or other bulk materials, as well as for in-process measurements of the above.

### PRECEEDING STATE OF THE ART

There is a known moisture meter for bulk materials comprising a probing microwave signal generator, a chamber to be filled with a measured material, transmitting and receiving horn antennas located on opposite sides of the chamber, a microwave-to-low frequency signal transducer connected to the output of the receiving horn antenna and to the measuring device input (see Benzar V.K. Microwave Moisture Measurement Technique. - Minsk: Vysshaya Shkola, 1974, pp.226-234).

The known moisture meter measures the moisture content in a material based on attenuation and phase shift of the probing signal propagating through the material. To eliminate signal scattering due to inhomogeneity, particle sizes of the measured material should be much smaller than the wavelength. The known moisture meter uses SHF-band microwaves. Therefore, it cannot be applied for moisture measurements in such bulk materials as crushed stone, crumb rubber etc. Moreover, in case of SHF-band microwaves, materials with high moisture content (e.g. sand with the moisture content exceeding 14-16 %wt) may almost completely attenuate the signal which also limits the application scope of the known moisture meter.

Furthermore, the antennas of the known moisture meter should be matched with the microwave signal propagation medium. In absence of such matching, the probing signal is repeatedly reflected at the interfaces between the measured material and an antenna, which results in attenuation measurement errors and, consequently, in faulty moisture content determination. The above-mentioned factor is compensated for by selecting appropriate sizes, material, and form of the chamber. However, when the moisture meter antennas are installed into an industrial hopper, the effect of multiple reflections, including those from the hopper walls, increases and the moisture measurement error grows.

There is a moisture meter for bulk materials known from publication WO 96/38721 consisting of a metallic hopper with walls to be filled with the above-mentioned material; a metallic rod installed inside the above-mentioned hopper and fixed through openings in the above-mentioned walls;
a primary transducer formed by the outer shield conductor which is the above-mentioned hopper with walls, and a signal conductor which is the above-mentioned rod, with the space between them to be filled with the above-mentioned material.

The first end of the metallic rod serves as a primary transducer input, while the other end of the above-mentioned rod serves as the output of the above-mentioned transducer;
a probing signal generator;
a measuring device.

This moisture meter, similar to the moisture meter referred to earlier in this text, measures material moisture levels based on attenuation and phase shift of the microwave probing signal propagating to the primary transducer input. As mentioned above, the accuracy of such moisture measurement method depends on the match between wave impedance of the primary transducer and wave impedance of cables connected to the transducer input and output. To provide the above-mentioned match at the primary transducer input and output, the known moisture meters comprise transition horns where both horn flares are isolated from the measured material with a microwave-transparent dielectric plate.

However, the transition horns ensure matching within a comparatively narrow wave impedance variation range of the primary transducer. It should be mentioned that wave impedance depends both on the type of the measured material (wheat grain, sunflower seeds, sand, crushed stone etc.) and on moisture content in the material. With fixed horn sizes, the match is achieved only for a specific type of material and with moisture levels varying within a limited range. Therefore, the moisture meter described in patent WO 96/38721 does not provide accurate measurements for a randomly selected material with a random moisture value. This moisture meter is not universal and provides measurement only of those materials for which the transition horns were specifically selected in terms of design parameters.

Structural complexity and the necessity to select transition horns sizes according to the measured material should be mentioned among the disadvantages of the known moisture meter. To ensure accurate measurement of the amplitude and phase of the output probing signal, the known moisture meter should comprise a reference circuit which adds up to the complexity of its design.

The dielectric plate incorporated in the transition horns to isolate the measured material decreases mechanical strength of the structure. Thus, it is impossible to use that moisture meter to control such materials as ore or crushed stone.

### CONCEPT OF THE INVENTION

The goal of the present invention is:
(i) to enable moisture measurements in bulk materials immediately in the production process without sampling,
(ii) to enhance measurement accuracy;
(iii) to simplify the moisture meter design,
(iv) to ensure independence of measurements from material density at low moisture levels.

The above-mentioned goal is realized by a moisture meter according to independent claim 1.

There are three suggested ways to place the metallic rod in the hopper. The choice of a specific way is determined by installation convenience and depends on the size and design specifics of the hopper, on the locations of external mounts, and on the specifics of bulk material filling and its passage through the hopper.

The first way implies that the openings in the hopper walls holding the metallic rod are made in opposite walls of the hopper in such a way that the axis of the metallic rod is parallel to at least one of the hopper walls.

The second way implies that both openings are made in the same wallof the hopper, the rod has the Π-shape and is installed along the above-mentioned wall of the hopper.

The third way implies that both openings are made in the same wall or in two adjacent walls of the hopper, the rod has the C-shape and has its axis parallel to at least one of the hopper walls.

The advantages in the second and third ways of metallic rod design and installation as compared to the first one are in the fact that the rod is subjected to lower stress from the bulk material and is less prone to deform. Moreover, when the hopper is filled with high-density material (crushed stone or sand), the hopper walls may deform. Thus, the stress on the metallic rod in the case where the first way is used. The second and third ways, where the openings (9, 10) are made in the same wall (3), help eliminate this problem.

Not only the real part of complex dielectric permittivity, but also the imaginary part should be measured to ensure highly accurate moisture measurements. The latter being determined based on the level of attenuation of the probing signal in the material. According to the moisture meter design, this is achieved due to the fact that the measuring cell comprises a resistor which first output is connected to the generator output, while the second output is directly connected to the primary transducer input; a first detector connected to the first output of the resistor and providing measurement of generator output voltage; and a second detector connected to the second output of the resistor and providing measurement of the primary transducer input voltage; the outputs of both detectors are connected to the measuring device.

It is desirable to take into account temperature of the material in addition to its complex dielectric permittivity value in order to ensure accurate moisture content measurement. To this end, the moisture meter may include a temperature sensor for bulk material which output is connected to the measuring device.

The metallic rod may have an opening at an end along the rod axis, and a temperature sensor, e.g. a thermocouple, installed inside the opening.

The bulk material should be static during the measuring process, and its quantity, i.e., hopper filling level, should be stable in order to achieve high measurement accuracy. This requirement can be met, in particular, by equipping the hopper with a gate covering its discharge hole, and a gate control drive with the electronic switch which generates a measurement-permitting signal and is connected to the measuring device.

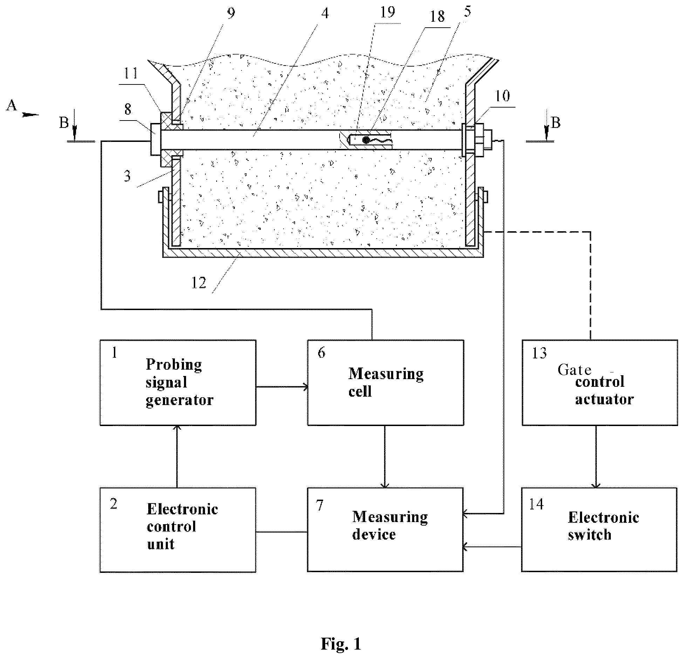

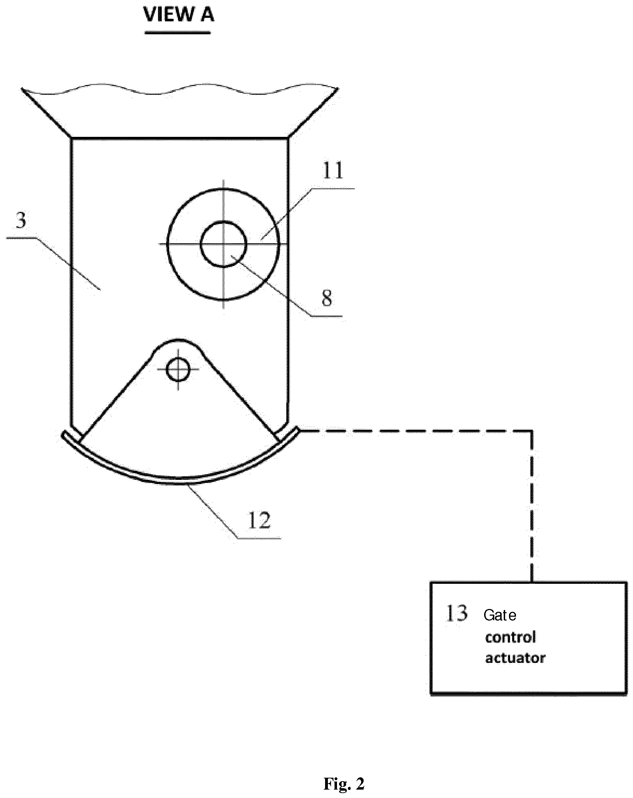

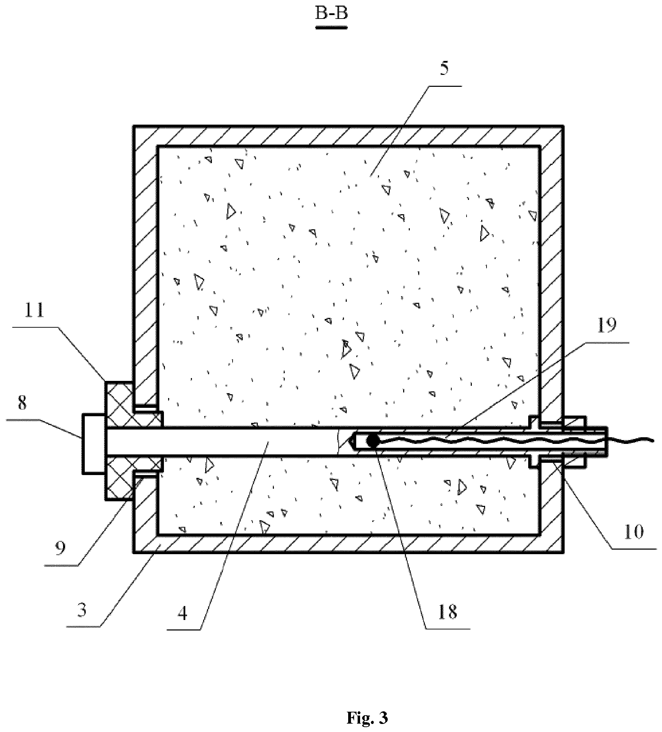

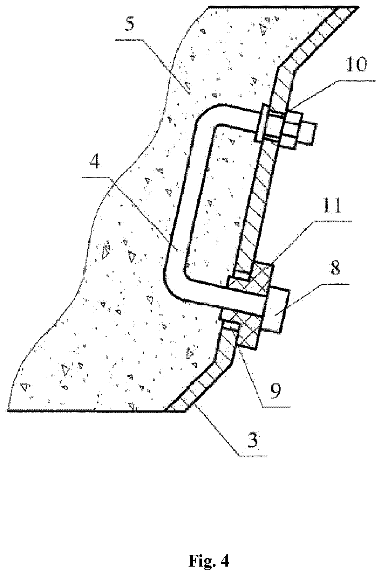

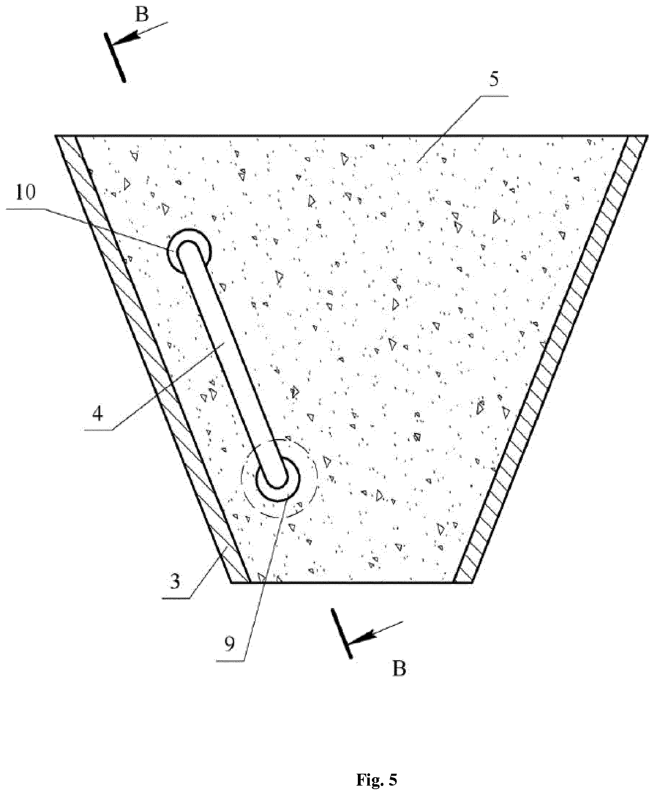

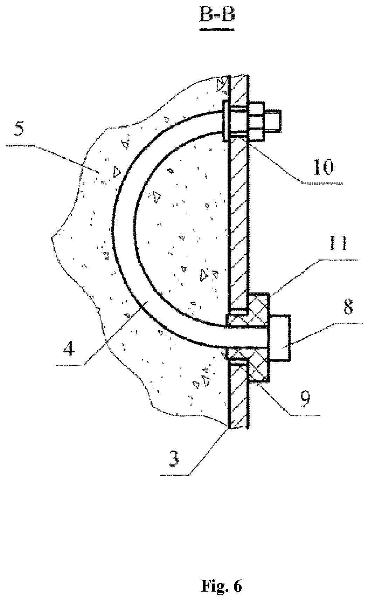

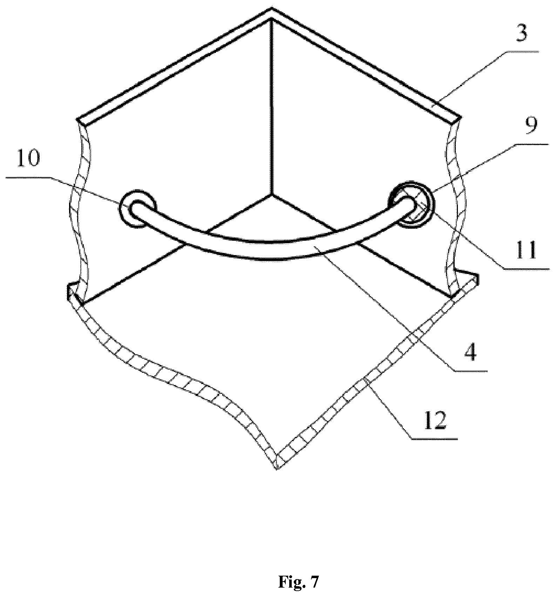

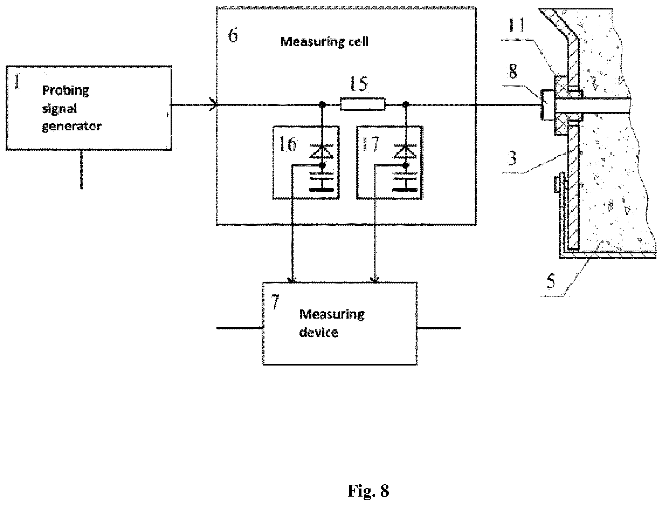

Figs. 1-8 illustrate the essence of the suggested engineering solution..

### BRIEF DESCRIPTION OF DRAWINGS

Fig. 1 illustrates the moisture meter for bulk materials.
Fig. 2 illustrates view A of the primary transducer shown in Fig. 1.
Fig. 3 illustrates section B-B of the primary transducer shown in Fig. 1. The illustration demonstrates the primary transducer option with the signal conductor made in the form of a straight metallic rod with a temperature sensor installed inside it.
Fig. 4 illustrates the primary transducer option with both openings made in the same wall of the hopper, and a Π-shaped rod installed along the above-mentioned wall of the hopper.
Figs. 5 and 6 illustrate the primary transducer option with both openings made in the same wall of the hopper, and a C-shaped rod installed with its axis parallel to the second hopper wall adjacent to the first hopper wall.
Fig. 7 illustrates the primary transducer option with both openings made in adjacent walls of the hopper, and a C-shaped rod installed with its axis parallel to a third hopper wall, e.g., formed by the gate.
Fig. 8 illustrates the design of the measuring cell.

### REALIZATION OF THE INVENTION

The moisture meter for bulk materials comprises a probing signal generator 1, an electronic control unit 2, a primary transducer formed by the outer shield conductor 3 and a signal conductor 4, the space between them to be filled with a measured bulk material 5, a measuring cell 6, and a measuring device 7. The generator 1 control input is connected to the electronic control unit 2. The measuring cell 6 is connected between the generator 1 output and the primary transducer input 8. The measuring device 7 is connected to the electronic control unit 2 and the measuring cell 6.

The probing signal generator (1) with a control input based on a frequency-controlled harmonic signal generator. A metallic hopper filled with a measured bulk material 5 is used as the outer shield conductor 3 of the primary transducer. The signal conductor 4 is made in the form of a metallic rod installed inside the hopper and fixed in the openings 9 and 10 in the hopper walls 3. There is a dielectric insulator11 installed between the rod 4 and the hopper wall 3 into the opening 9 at the first end of the metallic rod 4 serving as the primary transducer input 8. The other end of the metallic rod 4 is connected to a wall 3 of the metallic hopper through the opening 10 or near the opening 10 in such a way as to form an electrical contact between them in the connection spot;

The hopper comprises a gate 12 covering the hopper discharge hole, and a gate control drive 13. The gate 12 drive 13 is equipped with an electronic switch 14 connected to the measuring device 7 and generating a signal to allow measurement with the gate 12 closed.

The measuring cell 6 comprises a resistor 15 which first output is connected to the generator 1 output, and the other output is connected to the primary transducer input 8; a first detector 16 connected to the resistor 15 first output; a second detector 17 connected to the resistor 15 second output; the outputs of the detectors are connected to the measuring device 7.

The moisture meter may also comprise a bulk material temperature sensor 18, where the sensor 18 output is connected to the measuring device 7. The end (end face) of the metallic rod 4 has an opening 19 along the rod axis, and inside the opening the temperature sensor 18, e.g., a thermocouple, is installed.

The operating principle of the moisture meter involves determination of the moisture content in a bulk material based on its complex dielectric permittivity: not only the real part (as in the prototype), but also the imaginary part of this parameter is measured. Then, based on these parameters, the material moisture content is determined taking account of the material temperature.

Complex dielectric permittivity of the material is determined based on measurements of the following parameters:
- resonant frequency of the primary transducer determined during an adjustment of the harmonic signal generator based on the minimum value of the input impedance of the primary transducer filled with a bulk material;
- input impedance of the primary transducer at a resonant frequency with the transducer filled with a bulk material;

The moisture meter operates in the following manner: The electronic control unit 2 adjusts the generator (1) in the range of its operating frequencies. Simultaneously, during the adjustment, voltages at the first and second outputs of the measuring cell 6 resistor 15 are measured. Semiconductor detectors 16 and 17, which convert high-frequency signals to low-frequency ones, are used for the measurement. The voltage values U**₁₆** and U**₁₇**, measured at the output of the first detector 16 and at the output of the second detector 17 respectively, are sent to the measuring device input 7. The measuring device 7 determines the voltages ratio (U17 / Ui6.) The minimum of the voltage ratio (U**₁₇**/U**₁₆**) is achieved when the input impedance of the primary transducer is minimal. Using the measured value of this ratio and the known value of the resistor 15 impedance, the measuring device 7 processor computes the value of this impedance. Once the minimum is reached, the frequency of the harmonic signal produced by the generator 1 is determined and remembered. This frequency, taken the known geometric length of the signal conductor, allows for computing of the shortening coefficient for the electromagnetic wave in the measured material, since at the moment of minimal input impedance a whole number of half-wavelengths fits into the primary transducer length. Further, complex dielectric permittivity is computed based on the calculated input impedance taking account of the calculated shortening coefficient. Using conversion tables created for a set of temperatures and embedded in the processor memory, moisture content by weight is determined for a particular bulk material. The obtained result is transmitted from the measuring device 7 output via a digital interface (e.g. RS485) or by a current signal 4-20 mA to an external indicator or an industrial process controller.

It should be mentioned that the measurement process of the suggested moisture meter could be realized in two ways.

Way one: by means of the control unit 2, the generator 1 is adjusted by frequency in such a way that the signal ratio (U**₁₇**/U**₁₆**) at the measuring cell 6 output is minimal; when the minimum is reached, the measuring device 7 counts the probing signal frequency and the value of the primary transducer input impedance.

Option two: the measuring device 7 measures the ratio(U**₁₇**/U**₁₆**) for a number of frequencies from the frequency range around the minimum point, i.e. reads the full frequency characteristic of the primary transducer input impedance.

It should be noted that the electronic control unit 2 of the generator 1 with the capability to readjust the generator in the range of its operating frequencies could be realized in two ways:
- a synthesizer generating a generator frequency based on a digital code defined by the measuring device 7 with an integrated processor;
- an analogue stage adjusting the generator 1 until the minimal signal ratio (U**₁₇**/U**₁₆**) is achieved, in which case the measuring cell 6 and the measuring device 7 comprise measuring units to measure the probing signal frequency.

The measurement process should be performed with the gate 12 closed in order to increase accuracy,. The measurement-permitting signal is generated by the electronic switch 14 transmitted to the measuring device 7 input. The electronic switch is connected to the gate control drive 13. The moment of generation of the permitting signal is determined by filling and discharge modes of the hopper.

If the hopper is continuously filled with a bulk material and the gate 12 is open only to send a portion of the material to the downstream hopper, the changes can be initiated with a short delay after the gate 12 closure and continue all the time while the gate stays closed.

If the hopper is used as a balance for aggregation of a defined mass of a bulk material followed by gate 12 opening, then moisture measurements should start before the gate 12 opens and finish once it is open.

## Claims

1. Moisture meter for bulk materials (5) comprising:
a metallic hopper with walls (3) designed for being filled with the above-mentioned material (5);
a metallic rod (4) installed inside the above-mentioned hopper and fixed in openings (9, 10) made in said walls (3);
a primary transducer formed by an external shield conductor (3) which is the above-mentioned hopper with walls (3), and a signal conductor (4) which is the above-mentioned rod (4) with the space between them designed for being filled with the above-mentioned material; a first end (8) of the above-mentioned rod (4) serves as the input of the above-mentioned primary transducer;
an electronic control unit (2); a probing signal generator (1) with a control input based on a frequency-controlled harmonic signal generator has a control input connected to the electronic control unit (2) with the capability to readjust the generator (1) in the range of its operating frequencies; a measuring device (7);
***characterized in that:***
the opening (9) at the first end of the above-mentioned rod between the above-mentioned rod and the wall of the above-mentioned hopper comprises a dielectric insulator (11), and the other end of the above-mentioned rod (4) is connected to the wall (3) of the above-mentioned hopper in such a way as to form an electrical contact between them in the connection spot; a measuring cell (6) comprising a detector (17) connected to the first end (8) of the above-mentioned rod (4) is connected between the generator output (1) and the primary transducer input (8);
the measuring device (7) is connected to the above-mentioned measuring cell (6) and to the electronic control unit (2) making it possible to determine the moisture content by the frequency value on which the minimal input impedance of the above mentioned primary transducer is achieved.

2. The moisture meter as per claim 1, **characterized by** the fact that the openings (9, 10), in which the above-mentioned rod is fixed, are located on the opposite walls (3) of the hopper.

3. The moisture meter as per claim
1, **characterized by** the fact that the openings (9, 10), in which the above-mentioned rod (4) is fixed, are located on the same wall (3) of the above-mentioned hopper, the rod has the Π shape and is installed in the hopper along the above-mentioned wall (3).

4. The moisture meter as per claim 1, **characterized by** the fact that the openings (9, 10), in which the above-mentioned rod (4) is fixed, are located on the same wall (3) or on two adjacent walls of the above-mentioned hopper, the rod has the C shape and its axis is parallel to at least one of the walls (3) of the above-mentioned hopper (3).

5. The moisture meter as per any of claims 1-4, **characterized by** the fact, that it comprises a temperature sensor (18), installed inside the opening (19), located at the end of the above-mentioned rod (4) and drilled along the axis of this bar.

6. The moisture meter as per any of claims 1-4, **characterized by** the fact, that its above-mentioned measuring cell comprises a resistor (15), its first terminal is connected to the output of the above-mentioned generator (1) and a second detector (16) and its second terminal is connected to the above-mentioned input of the primary transducer; the outputs of detectors 16 and 17 are connected to the above-mentioned measuring device (7).

7. The moisture meter as per claim 6, **characterized by** the fact, that it additionally comprises a temperature sensor (18), installed inside the opening (19), located at the end of the above-mentioned rod (4) and drilled along the axis of this bar.

8. The moisture meter as per claim 1, **characterized by** the fact, that its above-mentioned hopper additionally comprises a gate (12) with the capability to close off its outlet opening and a gate control drive (13), connected to an electronic switch (14) forming the signal to allow measurements and connected to the above-mentioned measuring device.

9. Moisture meter as per claim 1, **characterized by** the fact that its above-mentioned electronic control device (2) is in the form of a synthesizer, forming the frequency of the generator (1) by the digital code, generated by the measuring device (7), comprising a processing unit.

10. Moisture meter as per claim 1, **characterized by** the fact that its above-mentioned electronic control device (2) is in the form of an analogue cascade, retuning the generator (1) until the minimal signal ratio (U**₁₇**/U**₁₆**) is reached, while the measuring device (7) must comprise a probing signal frequency measuring unit.

## Patentansprüche

1. Feuchtigkeitsmesser für Schüttgüter (5), der Folgendes aufweist:
einen Metalltrichter mit Wänden (3), der dazu ausgelegt ist, mit den oben genannten Gütern (5) befüllt zu werden;
einen Metallstab (4), der in dem oben genannten Trichter angebracht und in Öffnungen (9, 10), die sich in den Seitenwänden (3) befinden, installiert ist;
einen Primärwandler, der aus einem externen Schirmleiter (3), bei dem es sich um den oben genannten Trichter mit Wänden (3) handelt, und einem Signalleiter (4) gebildet ist, bei dem es sich um den oben genannten Stab (4) handelt, wobei der dazwischenliegende Raum dazu ausgelegt ist, mit den oben genannten Gütern befüllt zu werden;
ein erstes Ende (8) des oben genannten Stabs (4) dient als der Eingang für den oben genannten Primärwandler;
eine elektronische Steuereinheit (2);
ein Sondierungssignalgenerator (1) mit einem Steuereingang basierend auf einem frequenzgesteuerten harmonischen Signalgenerator weist einen Steuereingang auf, der mit der elektronischen Steuereinheit (2) in Verbindung steht, und die Fähigkeit aufweist, den Generator (1) in dem Bereich seiner Betriebsfrequenzen nachzusteuern;
eine Messvorrichtung (7);
**dadurch gekennzeichnet, dass**:
die Öffnung (9) am ersten Ende des oben genannten Stabs zwischen dem oben genannten Stab und der Wand des oben genannten Trichters einen dielektrischen Isolator (11) aufweist, und das andere Ende des oben genannten Stabs (4) mit der Wand (3) des oben genannten Trichters derart in Verbindung steht, dass eine elektrische Verbindung dazwischen in einem Verbindungspunkt gebildet wird;
eine Messzelle (6), die einen Detektor (17), der mit dem ersten Ende (8) des oben genannten Stabs (4) in Verbindung steht, aufweist, zwischen dem Generatorausgang (1) und dem primären Wandlereingang (8) verbunden ist;
die Messvorrichtung (7) mit der oben genannten Messzelle (6) und der elektronischen Steuereinheit (2) in Verbindung steht, was es ermöglicht, den Feuchtegehalt mittels des Frequenzwerts, mit dem die Mindesteingangsimpedanz des oben genannten Primärwandlers erreicht wird, zu bestimmen.

2. Feuchtigkeitsmesser nach Anspruch 1, **dadurch gekennzeichnet, dass** sich die Öffnungen (9, 10), in denen der oben genannte Stab befestigt ist, in den gegenüberliegenden Wänden (3) des Trichters befinden.

3. Feuchtigkeitsmesser nach Anspruch 1, **dadurch gekennzeichnet, dass** sich die Öffnungen (9, 10), in denen der oben genannte Stab (4) befestigt ist, in derselben Wand (3) des oben genannten Trichters befinden, wobei der Stab Π-förmig ist und in dem Trichter entlang der oben genannten Wand (3) angebracht ist.

4. Feuchtigkeitsmesser nach Anspruch 1, **dadurch gekennzeichnet, dass** sich die Öffnungen (9, 10), in denen der oben genannte Stab (4) befestigt ist, in derselben Wand (3) oder in zwei benachbarten Wänden des oben genannten Trichters befinden, der Stab C-förmig ist und seine Achse parallel zu mindestens einer der Wände (3) des oben genannten Trichters (3) verläuft.

5. Feuchtigkeitsmesser nach einem der Ansprüche 1 bis 4, **dadurch gekennzeichnet, dass** er einen Temperatursensor (18) aufweist, der in der Öffnung (19), die sich an dem Ende des oben genannten Stabs (4) befindet und entlang der Achse der Stange gebohrt ist, angebracht ist.

6. Feuchtigkeitsmesser nach einem der Ansprüche 1 bis 4, **dadurch gekennzeichnet, dass** die oben genannte Messzelle einen Widerstand (15) aufweist, dessen erster Anschluss mit dem Ausgang des oben genannten Generators (1) in Verbindung steht und ein zweiter Detektor (16) und dessen zweiter Anschluss mit dem oben genannten Eingang des Primärwandlers in Verbindung stehen; die Ausgänge der Detektoren 16 und 17 stehen mit der oben genannten Messvorrichtung (7) in Verbindung.

7. Feuchtigkeitsmesser nach Anspruch 6, **dadurch gekennzeichnet, dass** er zusätzlich einen Temperatursensor (18) aufweist, der in der Öffnung (19), die sich an dem Ende des oben genannten Stabs (4) befindet und entlang der Achse der Stange gebohrt ist, angebracht ist.

8. Feuchtigkeitsmesser nach Anspruch 1, **dadurch gekennzeichnet, dass** der oben genannte Trichter zusätzlich eine Klappe (12) mit der Fähigkeit, die Ausgangsöffnung zu schließen, und einen Klappensteuerungsantrieb (13), der mit einem elektrischen Schalter (14) verbunden ist, der das Signal bildet, um Messung zu gestatten, und mit der oben genannten Messvorrichtung in Verbindung steht, aufweist.

9. Feuchtigkeitsmesser nach Anspruch 1, **dadurch gekennzeichnet, dass** die oben genannte elektronische Steuervorrichtung (2) ein Synthesizer ist, der die Frequenz des Generators (1) durch den digitalen Code, der von der Messvorrichtung (7) generiert wird, bildet und eine Verarbeitungseinheit aufweist.

10. Feuchtigkeitsmesser nach Anspruch 1, **dadurch gekennzeichnet, dass** die oben genannte elektronische Steuervorrichtung (2) eine analoge Kaskade ist, die den Generator (1) rückstellt, bis das Mindestsignalverhältnis (U₁₇/U₁₆) erreicht ist, während die Messvorrichtung (7) eine Sondierungssignalfrequenz-Messeinheit aufweisen muss.

## Revendications

1. Hygromètre pour matériaux en vrac (5) comprenant :
une trémie métallique avec des parois (3) conçue pour être remplie avec le matériau (5) susmentionné ;
une tige métallique (4) installée à l'intérieur de la trémie susmentionnée et installé dans des ouvertures (9, 10) pratiquées dans lesdites parois (3) ; un transducteur primaire formé par un conducteur à blindage externe (3) qui est la trémie avec des parois (3) susmentionnée, et un conducteur de signal (4) qui est la tige (4) susmentionnée avec l'espace entre eux conçu pour être rempli avec le matériau susmentionné ; une première extrémité (8) de la tige (4) susmentionnée sert d'entrée du transducteur primaire susmentionné ;
une unité de commande électronique (2) ;
un générateur de signal de sondage (1) avec une entrée de commande basée sur un générateur de signal harmonique commandé en fréquence comporte une entrée de commande connectée à l'unité de commande électronique (2) avec la capacité de réajuster le générateur (1) dans la plage de ses fréquences de fonctionnement ;
un dispositif de mesure (7) ;
**caractérisé en ce que** :
l'ouverture (9) au niveau de la première extrémité de la tige susmentionnée entre la tige susmentionnée et la paroi de la trémie susmentionnée comprend un isolant diélectrique (11), et l'autre extrémité de la tige (4) susmentionnée est connectée à la paroi (3) de la trémie susmentionnée de manière à former un contact électrique entre elles dans le point de connexion ;
une cellule de mesure (6) comprenant un détecteur (17) connecté à la première extrémité (8) de la tige (4) susmentionnée est connectée entre la sortie de générateur (1) et l'entrée de transducteur primaire (8) ;
le dispositif de mesure (7) est connecté à la cellule de mesure (6) susmentionnée et à l'unité de commande électronique (2) permettant de déterminer la teneur en humidité par la valeur de fréquence à laquelle l'impédance d'entrée minimale du transducteur primaire susmentionné est atteinte.

2. Hygromètre selon la revendication 1, **caractérisé par le fait que** les ouvertures (9, 10), dans lesquelles la tige susmentionnée est fixée, sont situées sur les parois opposées (3) de la trémie.

3. Hygromètre selon la revendication 1, **caractérisé par le fait que** les ouvertures (9, 10), dans lesquelles la tige (4) susmentionnée est fixée, sont situées sur la même paroi (3) de la trémie susmentionnée, la tige a une forme de Π et est installée dans la trémie le long de la paroi (3) susmentionnée.

4. Hygromètre selon la revendication 1, **caractérisé par le fait que** les ouvertures (9, 10), dans lesquelles la tige (4) susmentionnée est fixée, sont situées sur la même paroi (3) ou sur deux parois adjacentes de la trémie susmentionnée, la tige a une forme de C et son axe est parallèle à au moins l'une des parois (3) de la trémie (3) susmentionnée.

5. Hygromètre selon l'une quelconque des revendications 1 à 4, **caractérisé par le fait qu'**il comprend un capteur de température (18), installé à l'intérieur de l'ouverture (19), située à l'extrémité de la tige (4) susmentionnée et forée le long de l'axe de cette barre.

6. Hygromètre selon l'une quelconque des revendications 1 à 4, **caractérisé par le fait que** sa cellule de mesure susmentionnée comprend un résistor (15), sa première borne est raccordée à la sortie du générateur (1) susmentionné et un second détecteur (16) et sa seconde borne est connectée à l'entrée susmentionnée du transducteur primaire ; les sorties des détecteurs 16 et 17 sont connectées au dispositif de mesure (7) susmentionné.

7. Hygromètre selon la revendication 6, **caractérisé par le fait qu'**il comprend de surcroît un capteur de température (18), installé à l'intérieur de l'ouverture (19), située à l'extrémité de la tige (4) susmentionnée et forée le long de l'axe de cette barre.

8. Hygromètre selon la revendication 1, **caractérisé par le fait que** sa trémie susmentionnée comprend de surcroît une porte (12) avec la capacité de fermer son ouverture de sortie et un pilote de commande de porte (13), connecté à un commutateur électronique (14) formant le signal pour permettre des mesures et connecté au dispositif de mesure susmentionné.

9. Hygromètre selon la revendication 1, **caractérisé par le fait que** son dispositif de commande électronique (2) susmentionné est sous la forme d'un synthétiseur, formant la fréquence du générateur (1) par le code numérique, généré par le dispositif de mesure (7), comprenant une unité de traitement.

10. Hygromètre selon la revendication 1, **caractérisé par le fait que** son dispositif de commande électronique (2) susmentionné est sous la forme d'une cascade analogique, resyntonisant le générateur (1) jusqu'à ce que le rapport de signal minimal (U₁₇/U₁₆) soit atteint, alors que le dispositif de mesure (7) doit comprendre une unité de mesure de fréquence de signal de sondage.
